# EUROPÄISCHE PATENTSCHRIFT

(11) **EP 1 204 685 B1**
(45) Veröffentlichungstag und Bekanntmachung des Hinweises auf die Patenterteilung: **13.10.2004**
(21) Anmeldenummer: 00958348.5
(22) Anmeldetag: 01.08.2000
(51) Int. Cl.: C08F 210/16, C08F 4/69

(54) **COPOLYMERE VON ETHYLEN MIT C3-C9 ALPHA-OLEFINEN**
COPOLYMERS OF ETHYLENE WITH C3-C9 ALPHA OLEFINS
COPOLYMERES D'ETHYLENE ET D'ALPHA-OLEFINES C3-C9

(30) Priorität: 13.08.1999 DE 19937863
(43) Veröffentlichungstag der Anmeldung: 15.05.2002
(73) Patentinhaber: Basell Polyolefine GmbH, 50389 Wesseling (DE)
(72) Erfinder: MIHAN, Shahram, 67061 Ludwigshafen (DE); LILGE, Dieter, 67117 Limburgerhof (DE); SCHWEIER, Günther, 67159 Friedelsheim (DE); ENDERS, Markus, 69123 Heidelberg (DE)
(86) Internationale Anmeldenummer: PCT/EP2000/007443
(87) Internationale Veröffentlichungsnummer: WO 2001/012687

(56) Entgegenhaltungen:
- EP-A- 0 640 627
- EP-A- 0 735 059
- EP-A- 0 877 051
- WO-A-93/03093
- WO-A-93/12151
- WO-A-98/44011

## Beschreibung

Gegenstand der Erfindung sind Copolymere von Ethylen mit C₃-C₉ α-Olefinen, welche eine Molmassenverteilung Mw/Mn von ≤ 10, eine Dichte von 0.88 bis 0.93 g/cm³, einen Comonomeranteil von 1 bis 40 Gew.-% Comonomer und eine Molmasse Mn größer 150000 g/mol aufweisen und deren Index der Breite der Zusammensetzungsverteilung des Comonomeren größer als 70% ist, ein Verfahren zu deren Herstellung und Ihre Verwendung, sowie diese Copolymere enthaltenden Fasern, Formkörper, Folien oder Polymermischungen.

Copolymere von Ethylen mit höheren α-Olefinen wie 1-Buten, 1-Penten, 1-Hexen oder 1-Okten, sogenanntes LLDPE (Linear Low Density Polyethylen) kann z.B. mit klassischen Ziegler-Natta Katalysatoren auf der Basis von Titan, aber auch mit Metallocenen dargestellt werden. Erstere ergeben dabei LLDPE mit einer breiten Verteilung der Zusammensetzung und einer relativ breiten mittleren Molmassenverteilung, z.B. mit Mw/Mn>3, worin Mn das Zahlenmittel, und Mw das Gewichtsmittel, der Molekulargewichte ist. Ein Maßstab für die Breite der Verteilung der Zusammensetzung ist der CDBI-Wert, der Composition Distribution Breadth Index. Der CDBI-Wert ist definiert als Gewichtsprozent der Copolymermoleküle mit Comonomergehalt innerhalb von 50% des mittleren Comonomergehaltes. Er läßt sich einfach durch TREF (Temperature Rising Elution Fraction) Analysen bestimmen (Wild et. al. J. Poly. Sci., Poly. Phys. Ed. Vol. 20, (1982), 441, oder US 5,008,204).

Dagegen kann man z.B. mit Metallocenenkatalysatoren Ethylencopolymere mit enger Molmassenverteilung und einem CDBI-Wert > 50% erhalten. Diese LLDPEs zeichnen sich durch besonders vorteilhafte mechanische Eigenschaften aus. Die Copolymerisation mit höheren α-Olefinen führt oftmals zu einem erniedrigten Molekulargewicht. In der Regel wird bei höherer Konzentration an Comonomer der Kettenabbruch immer mehr bevorzugt und damit das Molekulargewicht erniedrigt (US 5,625,016 beschreibt, daß Mn kleiner als ca. 50000 ist). Die niedermolekularen Copolymere können einerseits zu Ablagerungen im Reaktor während der Polymerisation führen und können andererseits zu unerwünschten Produkteigenschaften, wie z.B. klebrigen Oberfächen führen. LLDPEs mit hohem Molekulargewicht und hohem Comonomergehalt sind dagegen schwer darzustellen.

WO-A-98/44011 beschreibt Ethylenpolymere mit mindestens einem alpha Olefin mit mindestens 5 Kohlenstoffatomen mit einem melt index MI von 0.1 bis 15, einem CDBI-Wert von mindestens 70%, einer Dichte von 0.91 bis 0.93 g/ml, einem Haze value kleiner 20%, einem melt index ratio MIR von 35 bis 80, einem mittleren Modulus von 20000 bis 60000 psi und einem definierten Verhältnis von Modulus zu Dart Impact Strength. Die erhaltenen Polymere enthalten außerdem im wesentlichen keine ungesättigten Endgruppen (Seite 9, Zeile 16 bis 23).

WO-A-93/12151 beschreibt Ethylencopolymere mit alpha Olefinen mit mindestens 10 Kohlenstoffatomen mit einer Dichte zwischen 0.85 und 0.95 g/cm3, einem mittleren Molekulargewicht Mw zwischen 30000 und 1000000 Dalton und einer Molekulargewichtsverteilung zwischen 2 und 4.

Aufgabe der vorliegenden Erfindung war nun Copolymere mit hohen Molmassen, hohem Comonomeranteil und einem hohen CDBI-Wert zu finden, als auch ein geeignetes Darstellungsverfahren dafür.

Demgemäß wurden Copolymere von Ethylen mit C₃-C₉ α-Olefinen gefunden, welche eine Molmassenverteilung Mw/Mn von 1 bis 10, eine Dichte von 0.88 bis 0.93 g/cm³, einen Comonomeranteil von 1 bis 40% mol Comonomer und eine Molmasse Mn größer 150000 g/mol aufweisen und deren Index der Breite der Zusammensetzungsverteilung des Comonomeren größer als 70% ist.

Des weiteren wurde ein Verfahren zur Herstellung der erfindungsgemäßen Ethylencopolymere gefunden, dadurch gekennzeichnet, daß das Verfahren in Anwesenheit von folgenden Komponenten durchgeführt wird:
(A) Substituierte Monoindenyl- oder Monofluorenylchromkomplexe der allgemeinen Formel I 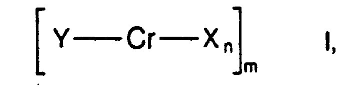 worin die Variablen folgende Bedeutung besitzen:
   - Y: durch folgende allgemeine Formel II 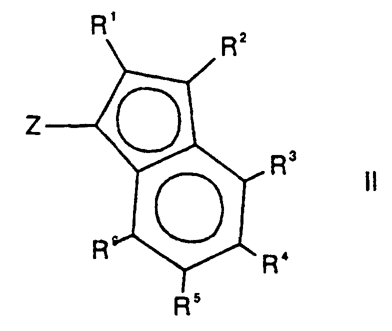 beschrieben ist, worin
   - Z: ein unsubstituiertes, substituiertes oder kondensiertes, heteroaromatisches Ringsystem bedeuten,
   - X: unabhängig voneinander Fluor, Chlor, Brom, Jod, wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR⁷R⁸, OR⁷, SR⁷, SO₃R⁷, OC(O)R⁷, CN, SCN, β-Diketonat, CO, BF₄-, PF₆-, oder sperrige nichtkoordinierende Anionen,
   - R¹-R⁸: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR⁹₃, wobei die organischen Reste R¹-R⁸ auch durch Halogene substituiert sein können und je zwei geminale oder vicinale Reste R¹-R⁸ auch zu einem fünf- oder sechsgliedrigen Ring verbunden sein können,
   - R⁹: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei geminale Reste R⁹ auch zu einem fünf- oder sechsgliedrigen Ring verbunden sein können,
   - n: 1, 2 oder 3,
   - m: 1, 2 oder 3,
   und
(B) optional einer oder mehreren Aktivatorverbindungen.

Weiterhin wurden Polymermischungen, wobei mindestens ein erfindungsgemäßes Copolymere von Ethylen mit C₃-C₁₂ α-Olefinen enthaltend ist, als auch Fasern, Folien und Formkörper, worin die erfindungsgemäßen Copolymere von Ethylen mit C₃-C₁₂ α-Olefinen als wesentliche Komponente enthalten sind, gefunden.

Des weiteren wurde die Verwendung der erfindungsgemäßen Copolymere von Ethylen mit C₃-C₉ α-Olefinen zur Herstellung von Fasern, Folien und Formkörpern gefunden.

Der Ausdruck "HLMFR" steht im Rahmen dieser Erfindung in bekannter Weise für "High Load Melt Flow Rate" und wird stets bei 190°C unter einer Last von 21.6 kg (190°C/21.6 kg) ermittelt.

Die Breite der Comonomerverteilung der erfindungsgemäßen Copolymeren läßt sich in vorteilhafter Weise über die Standardabweichung der mittleren gewichteten Elusionstemperatur Ta, wie sie nach der TREF-Methode ermittelt werden kann, beschrieben. Die Methode der TREF ist z.B. in Wild, Advances in Polymer Science, 98, p.1-47, 57 p. 153, 1992 beschrieben. Die mittlere gewichtete Elusionstemperatur (Ta) und die Standardabweichung (s) werden wie von (s.a. Bevington, Mc Graw-Hill, Data Reduction and Error Analysis for the physical Sciences, 1969 beschrieben) verwendet:

Das erfindungsgemäße Copolymere von Ethylen mit C₃-C₉ α-Olefinen hat eine Molmassenverteilung Mw/Mn von ≤ 10, bevorzugt von 2 bis 4 und besonders bevorzugt von 2 bis 3.5, eine Dichte im Bereich von 0.88 bis 0.93 g/cm³ und eine Molmasse Mn größer 150000 g/mol, vorzugsweise größer 200000 g/mol, und ganz besonders bevorzugt größer 250000 g/mol. Ihr HLMFR liegt im Bereich von 0.001 bis 20 g/10min, vorzugsweise zwischen 0.01 bis 15 g/10min und der Index der Breite der Zusammensetzungsverteilung des Comonomeren ist größer als 70%, bevorzugt größer als 80% und besonders bevorzugt größer als 90%.

Eine bevorzugte Ausführungsform des erfindungsgemäßen Copolymeren besitzt einen Index der Breite der Zusammensetzungsverteilung des Comonomeren größer als 90% und eine Molmassenverteilung Mw/Mn zwischen 2 und 4.

Die erfindungsgemäßen Copolymere besitzen bevorzugt eine vinyl oder vinyliden terminierte Endgruppe.

Als Comonomere, welche neben Ethylen in dem erfindungsgemäßen Copolymer, einzeln oder im Gemisch miteinander, enthalten sein können, kommen alle α-Olefine mit 3 bis 9C-Atomen in Betracht, wie z.B. Propen, 1-Buten, 1-Penten, 1-Hexen, 4-Methyl-1-Penten, 1-Hepten und 1-Octen. Vorzugsweise enthält das Ethylencopolymer als Comonomereinheit Buten, Penten, Hexen, 4-Methyl-Penten oder Octen einpolymerisiert. Besonders bevorzugt werden α-Olefine ausgewählt aus der Gruppe Propen, 1-Buten, 1-Hexen und 1-Okten eingesetzt. Die Comonomeren sind in dem erfindungsgemäßen Ethylencopolymeren in aller Regel in Mengen von 1 bis 40 Gew.-%, vorzugsweise von 5 bis 20 Gew.-% und insbesondere von 10 bis 20 Gew.-%, jeweils bezogen auf das Ethylencopolymere, einpolymerisiert enthalten.

Die Ethylencopolymere können prinzipiell mit jedem Katalysator oder Katalysatorsystem hergestellt werden, der oder das zu Produkten mit der erforderlichen engen Molmassenverteilung führt. In der Regel sind diese Katalysatoren sogenannte Single-Site-Katalysatoren, bevorzugt die oben beschriebenen substituierten Monoindenylchromkomplexe der Formel I, wobei mindestens einer der Substituenten am Indenyl-Fünfring ein unsubstituiertes, substituiertes oder kondensiertes, heteroaromatisches Ringsystem trägt.

Der Indenylring ist in den erfindungsgemäßen Komplexen η⁵ an das Chromzentrum gebunden. Die Substituenten am Indenylsystem können auch ein Benzindenyl- oder Fluorenylsystem ausbilden.

Y ist ein substituiertes Indenylsystem, welches ein unsubstituiertes, substituiertes oder kondensiertes, heteroaromatisches Ringsystem trägt, welches koordinativ gebunden oder nicht koordiniert sein kann. Bevorzugt ist das heteroaromatische Ringsystem intramolekular an das Chromzentrum koordiniert.

Z ist ein unsubstituiertes, substituiertes oder kondensiertes, heterocyclisches aromatisches Ringsystem, welches neben Kohlenstoffringgliedern Heteroatome aus der Gruppe Sauerstoff, Schwefel, Stickstoff und Phosphor enthalten kann. Beispiele für 5-Ring Heteroarylgruppen, welche neben Kohlenstoffatomen ein bis vier Stickstoffatome oder ein bis drei Stickstoffatome und/oder ein Schwefel- oder Sauerstoffatom als Ringglieder enthalten können, sind 2-Furyl, 2-Thienyl, 2-Pyrrolyl, 3-Isoxazolyl, 5-Isoxazolyl, 3-Isothiazolyl, 5-Isothiazolyl, 1-Pyrazolyl, 3-Pyrazolyl, 5-Pyrazolyl, 2-Oxazolyl, 4-Oxazolyl, 5-Oxazolyl, 2-Thiazolyl, 4-Thiazolyl, 5-Thiazolyl, 2-Imidazolyl, 4-Imidazolyl, 5-Imidazolyl, 1,2,4-Oxadiazol-3-yl, 1,2,4-Oxadiazol-5-yl, 1,3,4-Oxadiazol-2-yl oder 1,2,4-Triazol-3-yl. Beispiele für 6-gliedrige Heteroarylgruppen, welche ein bis vier Stickstoffatome und/oder ein Phosphoratom enthalten können, sind 2-Pyridinyl, 2-Phosphabenzolyl 3-Pyridazinyl, 2-Pyrimidinyl, 4-Pyrimidinyl, 2-Pyrazinyl, 1.3,5-Triazin-2-yl und 1,2,4-Triazin-3-yl, 1,2,4-Triazin-5-yl oder 1,2,4-Triazin-6-yl. Die 5-Ring und 6-Ring Heteroarylgruppen können hierbei auch durch C₁-C₁₀-Alkyl, C₆-C₁₀-Aryl, Alkylaryl mit 1 bis 10 C-Atomen im Alkylrest und 6-10 C-Atomen im Arylrest, Trialkylsilyl oder Halogenen, wie Fluor, Chlor oder Brom substituiert oder mit ein oder mehreren Aromaten oder Heteroaromaten kondensiert sein. Beispiele für benzokondensierte 5-gliedrige Heteroarylgruppen sind 2-Indolyl, 7-Indolyl, 2-Cumaronyl, 7-Cumaronyl, 2-Thionaphthenyl, 7-Thionaphthenyl, 3-Indazolyl, 7-Indazolyl, 2-Benzimidazolyl oder 7-Benzimidazolyl. Beispiele für benzokondensierte 6-gliedrige Heteroarylgruppen sind 2-Chinolyl, 8-Chinolyl, 3-Cinnolyl, 8-Cinnolyl, 1-Phthalazyl, 2-Chinazolyl, 4-Chinazolyl, 8-Chinazolyl, 5-Chinoxalyl, 4-Acridyl, 1-Phenanthridyl oder 1-Phenazyl. Bezeichnung und Nummerierung der Heterocyclen wurde aus L.Fieser und M. Fieser, Lehrbuch der organischen Chemie, 3. neubearbeitete Auflage, Verlag Chemie, Weinheim 1957 entnommen. Hierbei sind einfache Systeme bevorzugt, die leicht zugänglich und billig sind und aus der folgenden Gruppe ausgewählt sind:

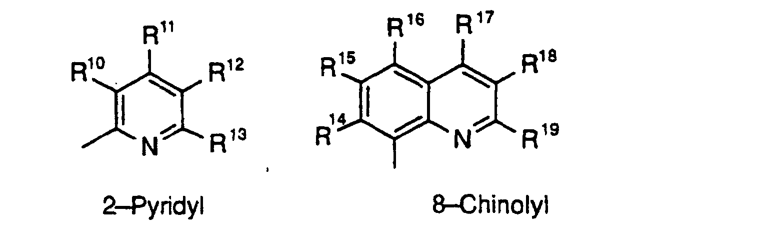

Durch geeignete Wahl der Reste R¹⁰ bis R¹⁹ kann Einfluß auf die Aktivität des Katalysators und das Molekulargewicht des entstehenden Polymeren genommen werden. Als Substituenten R¹⁰ bis R¹⁹ kommen die gleichen Reste, wie für R¹-R⁸ beschrieben und Halogene, wie z.B. Fluor, Chlor oder Brom in Betracht, wobei gegebenenfalls auch zwei vicinale Reste R¹⁰ bis R¹⁹ zu einem 5- oder 6-gliedrigen Ring verbunden sein können und auch durch Halogene, wie Fluor, Chlor oder Brom substituiert sein können. Bevorzugte Reste R¹⁰ bis R¹⁹ sind Wasserstoff, Methyl, Ethyl, n-Propyl, n-Butyl, tert.-Butyl, n-Pentyl, n-Hexyl, n-Heptyl, n-Octyl, Vinyl, Allyl, Benzyl, Phenyl, Naphthyl, Biphenyl und Anthranyl, sowie Fluor, Chlor und Brom. Als Si-organische Substituenten kommen besonders Trialkylsilyl-Gruppen mit 1 bis 10 C-Atomen im Alkylrest in Betracht, insbesondere Trimethylsilyl-Gruppen. Ganz besonders bevorzugt ist Z ein unsubstituiertes oder substituiertes, z.B. alkylsubstituiertes, insbesondere in Position 8 verknüpftes Chinolyl, z.B. 8-Chinolyl, 8-(2-Methylchinolyl), 8-(2,3,4-Trimethylchinolyl), 8-(2,3,4,5,6,7-Hexamethylchinolyl. Es ist sehr einfach darstellbar und liefert gleichzeitig sehr gute Aktivitäten.

Auch durch die Variation der Substituenten R¹-R⁸ lassen sich verschiedene Eigenschaften des Katalysatorsystems verändern. Durch die Zahl und Art der Substituenten, insbesondere von R¹ und R² kann die Zugänglichkeit des Metallatoms M für die zu polymerisierenden Olefine beeinflußt werden. So ist es möglich die Aktivität und Selektivität des Katalysators hinsichtlich verschiedener Monomerer, insbesondere sterisch anspruchsvoller Monomerer, zu modifizieren. Da die Substituenten auch auf die Geschwindigkeit von Abbruchreaktionen der wachsenden Polymerkette Einfluß nehmen können, läßt sich hierdurch auch das Molekulargewicht der entstehenden Polymere verändern. Die chemische Struktur der Substituenten R¹ bis R⁸ kann daher in weiten Bereichen variiert werden, um die gewünschten Ergebnisse zu erzielen und ein maßgeschneidertes Katalysatorsystem zu erhalten. Als C-organische Substituenten R¹-R⁸ kommen beispielsweise folgende in Betracht: C₁-C₂₀-Alkyl, wobei das Alkyl linear oder verzweigt sein kann, wie z.B. Methyl, Ethyl, n-Propyl, iso-Propyl, n-Butyl, iso-Butyl, tert.-Butyl, n-Pentyl, n-Hexyl, n-Heptyl, n-Octyl, n-Nonyl, n-Decyl oder n-Dodecyl, 5- bis 7-gliedriges Cycloalkyl, das seinerseits eine C₆-C₁₀-Arylgruppe als Substituent tragen kann, wie z.B. Cyclopropan, Cyclobutan, Cyclopentan, Cyclohexan, Cycloheptan, Cyclooctan, Cyclononan oder Cyclododekan, C₂-C₂₀-Alkenyl, wobei das Alkenyl linear, cyclisch oder verzweigt sein kann und die Doppelbindung intern oder endständig sein kann, wie z.B. Vinyl, 1-Allyl, 2-Allyl, 3-Allyl, Butenyl, Pentenyl, Hexenyl, Cyclopentenyl, Cyclohexenyl, Cyclooctenyl oder Cyclooktadienyl, C₆-C₂₀-Aryl, wobei der Arylrest durch weitere Alkylgruppen substituiert sein kann, wie z.B. Phenyl, Naphthyl, Biphenyl, Anthranyl, o-, m-, p-Methylphenyl, 2,3-, 2,4-, 2,5-, oder 2,6-Dimethylphenyl, 2,3,4-, 2,3,5-, 2,3,6-, 2,4,5-, 2,4,6- oder 3,4,5-Trimethylphenyl, oder Arylalkyl, wobei das Arylalkyl durch weitere Alkylgruppen substituiert sein kann, wie z.B. Benzyl, o-, m-, p-Methylbenzyl, 1- oder 2-Ethylphenyl, wobei gegebenenfalls auch zwei R¹ bis R¹⁶ zu einem 5- oder 6-gliedrigen Ring verbunden sein können und die organischen Reste R¹-R⁸ auch durch Halogene, wie z.B. Fluor, Chlor oder Brom substituiert sein können. Als Si-organische Substituenten SiR⁹₃ kommen für R⁹ die gleichen Reste, wie oben für R¹-R⁸ näher ausgeführt, wobei gegebenenfalls auch zwei R⁹ zu einem 5- oder 6-gliedrigen Ring verbunden sein können, in Betracht, wie z.B. Trimethylsilyl, Triethylsilyl, Butyldimethylsilyl, Tributylsilyl, Triallylsilyl, Triphenylsilyl oder Dimethylphenylsilyl. Bevorzugt Reste R¹-R⁶ sind Wasserstoff, Methyl, Ethyl, n-Propyl, iso-Propyl, n-Butyl, iso-Butyl, tert.-Butyl, n-Pentyl, n-Hexyl, n-Heptyl, n-Octyl, Vinyl, Allyl, Benzyl, Phenyl, ortho Dialkyl- oder Dichlorosubstituierte Phenyle, Trialkyl- oder Trichlorosubstituierte Phenyle, Naphthyl, Biphenyl und Anthranyl. Als Si-organische Substituenten kommen besonders Trialkylsilyl-Gruppen mit 1 bis 10 C-Atomen im Alkylrest in Betracht, insbesondere Trimethylsilyl-Gruppen. Besonders bevorzugte Reste R¹ und R² sind Methyl, Ethyl, n-Propyl, iso-Propyl, n-Butyl, iso-Butyl, tert.-Butyl, n-Pentyl, n-Hexyl, n-Heptyl, n-Octyl, Allyl, Benzyl, Phenyl oder Trialkylsilyl-Gruppen. Bevorzugt sind R³ bis R⁶ Wasserstoff, Methyl, Ethyl, n-Propyl, iso-Propyl, n-Butyl, iso-Butyl, tert.-Butyl, n-Pentyl, n-Hexyl, n-Heptyl, n-Octyl, Benzyl oder Phenyl. Bevorzugt ist Y (ohne Z) ein Indenyl, wie z.B. Indenyl, 2-Methylindenyl, 2-Ethylindenyl, 2-Isopropylindenyl, 3-Methylindenyl, 4-Phenylindenyl, 2-Methyl-4-phenylindenyl oder 4-Naphthylindenyl oder Benzindenylsystem, wie z.B. Benzindenyl oder 2-Methylbenzindenyl, in ganz besonders bevorzugten Übergangsmetallkomplexen ein Indenyl.

In einer besonders bevorzugten Ausführungsform ist Z ein unsubstituiertes oder substituiertes 8-(Chinolyl)System und R¹ bis R⁶ gleich Wasserstoff.

Die Substituenten X ergeben sich z.B. durch die Auswahl der entsprechenden Chromausgangsverbindungen, die zur Synthese der Chromkomplexe verwendet werden, können aber auch nachträglich noch variiert werden. Als Substituenten X kommen insbesondere die Halogene wie Fluor, Chlor, Brom oder Jod und darunter insbesondere Chlor in Betracht. Auch einfache Alkylreste, wie Methyl, Ethyl, Propyl, Butyl, Vinyl, Allyl, Phenyl oder Benzyl stellen vorteilhafte Liganden X dar. Als weitere Liganden X sollen nur exemplarisch und keineswegs abschließend Trifluoracetat, BF₄⁻, PF₆- sowie schwach bzw. nicht koordinierende Anionen (siehe z.B. S. Strauss in Chem. Rev. 1993, 93, 927-942) wie B(C₆F₅)₄⁻ genannt werden. Die Benennung der Liganden X als Anionen beinhaltet keine Festlegung welcher Art die Bindung zum Übergangsmetall M ist. Ist X z.B. ein nicht oder schwach koordinierendes Anion, so ist die Wechselwirkung zwischen dem Metall M und dem Liganden X eher elektrostatischer Natur. Im Falle z.B. für X gleich Alkyl ist die Bindung dagegen kovalent. Die verschiedenen Arten von Bindungen sind dem Fachmann bekannt.

Auch Amide, Alkoholate, Sulfonate, Carboxylate und β-Diketonate sind besonders geeignet. Durch Variation der Reste R⁷ und R⁸ können z.B. physikalische Eigenschaften wie Löslichkeit fein eingestellt werden. Bevorzugt werden C₁-C₁₀-Alkyl wie Methyl, Ethyl, n-Propyl, n-Butyl, tert.-Butyl, n-Pentyl, n-Hexyl, n-Heptyl, n-Octyl, sowie Vinyl, Allyl, Benzyl und Phenyl als Reste R⁷ und R⁸ verwendet. Manche dieser substituierten Liganden X werden ganz besonders bevorzugt verwendet, da sie aus billigen und einfach zugänglichen Ausgangsstoffen erhältlich sind. So ist eine besonders bevorzugte Ausführungsform, wenn X für Dimethylamid, Methanolat, Ethanolat, Isopropanolat, Phenolat, Naphtholat, Triflat, p-Toluolsulfonat, Acetat oder Acetylacetonat steht.

Die Anzahl n der Liganden X hängt von der Oxidationsstufe des Chromzentrums ab. Die Zahl n kann somit nicht allgemein angegeben werden. Chrom liegt sehr wahrscheinlich in der Oxidationsstufe +3 vor. Es können jedoch auch Komplexe eingesetzt werden, deren Oxidationsstufe nicht der des aktiven Katalysators entspricht. Solche Komplexe können dann durch geeignete Aktivatoren entsprechend reduziert oder oxidiert werden. Bevorzugt werden Chromkomplexe in der Oxidationsstufe +3 verwendet.

Der Donor Z kann an das Chrom koordinativ gebunden sein. Dies ist inter- oder intramolekular möglich. Bevorzugt ist der Donor Z intramolekular an das Chrom koordinativ gebunden. Dies kann sich jedoch im Verlauf der Polymerisation ändern.

Der Übergangsmetallkomplex der Formel I kann als monomere, dimere oder trimere Verbindung vorliegen, wobei m dann 1, 2 oder 3 ist. Dabei können z.B. ein oder mehrere Liganden X zwei Metallzentren M verbrücken.

Bevorzugte Komplexe sind z.B. 1-(8-Chinolyl)indenylchrom(III)dichlorid, 1-(8-Chinolyl)-2-methylindenylchrom(III)dichlorid, 1-(8-Chinolyl)-2-isopropylindenylchrom(III)dichlorid, 1-(8-Chinolyl)-2-ethylindenylchrom(III)dichlorid, 1-(8-Chinolyl)-2-tert.butylindenylchrom(III)dichlorid, 1-(8-Chinolyl)benzindenylchrom(III)dichlorid, 1-(8-Chinolyl)-2-methylbenzindenylchrom(III)dichlorid, 1-(8-(2-Methylchinolyl))indenylchrom(III)dichlorid, 1-(8-(2-Methylchinolyl))-2-methylindenylchrom(III)dichlorid, 1-(8-(2-Methylchinolyl))-2-isopropylindenylchrom(III)dichlorid, 1-(8-(2-Methylchinolyl))-2-ethylindenylchrom(III)dichlorid, 1-(8-(2-Methylchinolyl))-2-tert.butylindenylchrom(III)dichlorid, 1-(8-(2-Methylchinolyl))benzindenylchrom(III)dichlorid oder 1-(8-(2-Methylchinolyl))-2-methylbenzindenylchrom(III)dichlorid.

Die Metallkomplexe, insbesondere die Chromkomplexe, lassen sich auf einfache Weise erhalten, wenn man die entsprechenden Metallsalze wie z.B. Metallchloride mit dem Ligandanion umsetzt (z.B. analog zu den Beispielen in DE 197 10615).

Das erfindungsgemäße Verfahren zur Polymerisation von Olefinen läßt sich mit allen technisch bekannten Polymerisationsverfahren bei Temperaturen im Bereich von 20 bis 300°C und unter Drücken von 5 bis 4000 bar kombinieren. Die vorteilhaften Druck- und Temperaturbereiche zur Durchführung des Verfahrens hängen demgemäß stark von der Polymerisationsmethode ab. So lassen sich die erfindungsgemäß verwendeten Katalysatorsysteme in allen bekannten Polymerisationsverfahren, also beispielsweise in Hochdruck-Polymerisationsverfahren in Rohrreaktoren oder Autoklaven, in Suspensions-Polymerisationsverfahren, in Lösungs-polymerisationsverfahren oder bei der Gasphasenpolymerisation einsetzen. Bei den Hochdruck-Polymerisationsverfahren, die üblicherweise bei Drücken zwischen 1000 und 4000 bar, insbesondere zwischen 2000 und 3500 bar, durchgeführt werden, werden in der Regel auch hohe Polymerisationstemperaturen eingestellt. Vorteilhafte Temperaturbereiche für diese Hochdruck-Polymerisationsverfahren liegen zwischen 200 und 330°C, insbesondere zwischen 220 und 270°C. Bei Niederdruck-Polymerisationsverfahren wird in der Regel eine Temperatur eingestellt, die mindestens einige Grad unter der Erweichungstemperatur des Polymerisates liegt. Insbesondere werden in diesen Polymerisationsverfahren Temperaturen zwischen 50 und 180°C, vorzugsweise zwischen 70 und 120°C, eingestellt. Bei den Suspensionspolymerisationen wird üblicherweise in einem Suspensionsmittel, vorzugsweise in einem Alkan polymerisiert. Insbesondere können auch die höheren Olefine wie Propen, Buten oder Hexen in verflüssigtem oder flüssigem Zustand auch das Suspensionsmittel in der Polymerisation- und Copolymerisationsreaktion bilden.

Die Polymerisationstemperaturen liegen i.a. im Bereich von -20 bis 115°C, der Druck i.a. im Bereich von 1 bis 100 bar. Der Feststoffgehalt der Suspension liegt i.a. im Bereich von 10 bis 80 %. Es kann sowohl diskontinuierlich, z.B. in Rührautoklaven, als auch kontinuierlich, z.B. in Rohrreaktoren, bevorzugt in Schleifreaktoren, gearbeitet werden. Insbesondere kann nach dem Phillips-PF-Verfahren, wie in der US-A 3 242 150 und US-A 3 248 179 beschrieben, gearbeitet werden.
Von den genannten Polymerisationsverfahren ist erfindungsgemäß die Gasphasenpolymerisation, insbesondere in Gasphasenwirbelschicht-Reaktoren, die Lösungspolymerisation, sowie die Suspensionspolymerisation, insbesondere in Schleifen- und Rührkesselreaktoren, besonders bevorzugt. Die Gasphasenpolymerisation kann auch in der sogenannten condensed, supercondensed oder superkritischen Fahrweise durchgeführt werden. Die verschiedenen oder auch gleichen Polymerisationsverfahren können auch wahlweise miteinander in Serie geschaltet sein und so eine Polymerisationskaskade bilden. Weiterhin kann zur Regelung der Polymereigenschaften auch ein Zusatz, wie z.B. Wasserstoff in den Polymerisationsverfahren verwendet werden.

Die erfindungsgemäßen Metallkomplexe sind für sich teilweise nicht oder wenig polymerisationsaktiv und werden dann mit einem Aktivator, der Komponente (B), in Kontakt gebracht um gute Polymerisationsaktivität entfalten zu können. Als Aktivatorverbindungen kommen beispielsweise solche vom Alumoxantyp in Betracht, insbesondere Methylalumoxan MAO. Alumoxane werden z.B. durch kontrollierte Addition von Wasser zu Alkylaluminiumverbindungen, insbesondere Trimethylaluminium, hergestellt. Als Co-Katalysator geeignete Alumoxan-Zubereitungen sind kommerziell erhältlich. Es wird angenommen, daß es sich hierbei aus einer Mischung von cyclischen und linearen Verbindungen handelt. Die cyclischen Alumoxane können durch die Formel (R²⁰AlO)ₛ und die linearen Aluminoxane durch die Formel R²⁰(R²⁰AlO)ₛR²⁰₂Al zusammengefaßt werden, wobei s den Oligomerisationsgrad angibt und eine Zahl von ungefähr 1 bis 50 ist. Vorteilhafte Alumoxane enthalten im wesentlichen Alumoxan- Oligomere mit einem Oligomerisationsgrad von etwa 1 bis 30 und R²⁰ ist bevorzugt ein C₁-C₆-Alkyl und besonders bevorzugt Methyl, Ethyl, Butyl oder Isobutyl.

Neben den Alumoxanen können als Aktivatorkomponenten auch solche eingesetzt werden, wie sie in der sogenannten kationischen Aktivierung der Metallocen-Komplexe Verwendung finden. Derartige Aktivatorkomponenten sind z.B. aus EP-B1-0468537 und aus EP-B1-0427697 bekannt. Insbesondere können als solche Aktivatorverbindungen (B) Borane, Boroxine oder Borate, wie z. B. Trialkylboran, Triarylboran, Trimethylboroxin, Dimethylaniliniumtetraarylborat, Trityltetraarylborat, Dimethylaniliniumboratabenzole oder Tritylboratabenzole (siehe WO-A-97/36937) eingesetzt werden. Besonders bevorzugt werden Borane oder Borate eingesetzt, welche mindestens zwei perfluorierte Arylreste tragen. Als besonders geeignete Aktivatorverbindung (B) werden Verbindung aus der Gruppe Aluminoxan, Dimethylaniliniumtetrakispentafluorophenylborat, Trityltetrakispentafluorophenylborat oder Trispentafluorophenylboran verwendet.

Auch Aktivatorverbindungen mit stärker oxidierenden Eigenschaften sind einsetzbar, wie z.B. Silberborate, insbesondere Silbertetrakispentafluorophenylborat oder Ferroceniumborate, insbesondere Ferroceniumtetrakispentafluorophenylborat oder Ferroceniumtetraphenylborat.

Weiterhin können als Aktivatorkomponente Verbindungen wie Aluminiumalkyle, insbesondere Trimethylaluminium, Triethylaluminium, Triisobutylaluminium, Tributylaluminium, Dimethylaluminiumchlorid, Dimethylaluminiumfluorid, Methylaluminiumdichlorid, Methylaluminiumsesquichlorid, Diethylaluminiumchlorid oder Aluminiumtrifluorid eingesetzt werden. Auch die Hydrolyseprodukte von Aluminiumalkylen mit Alkoholen können eingesetzt werden (siehe z.B. WO-A-95/10546).

Als Aktivatorverbindungen können des weiteren auch Alkylverbindungen von Lithium, Magnesium oder Zink verwendet werden, wie z.B. Methylmagnesiumchlorid, Methylmagnesiumbromid, Ethylmagnesiumchlorid, Ethylmagnesiumbromid, Butylmagnesiumchlorid, Dimethylmagnesium, Diethylmagnesium, Dibutylmagnesium, Methyllithium, Ethyllithium, Methylzinkchlorid, Dimethylzink oder Diethylzink.

Manchmal ist es wünschenswert eine Kombination von verschiedenen Aktivatoren zu verwenden. Dies ist z.B. bei den Metallocenen bekannt, bei denen Borane, Boroxine (WO-A-93/16116) und Borate oft in Kombination mit einem Aluminiumalkyl eingesetzt werden. Generell ist auch eine Kombination von verschiedenen Aktivatorkomponenten mit dem erfindungsgemäßen Übergangsmetallkomplex möglich.

Die Menge der zu verwendenden Aktivatorverbindungen hängt von der Art des Aktivators ab. Generell kann das Molverhältnis Metallkomplex (A) zu Aktivatorverbindung (B) von 1:0.1 bis 1:10000 betragen, bevorzugt werden 1:1 bis 1:2000. Das Molverhältnis von Metallkomplex (A) zu Dimethylaniliniumtetrakispentafluorophenylborat, Trityltetrakispentafluorophenylborat oder Trispentafluorophenylboran liegt zwischen 1:1 und 1:20, bevorzugt zwischen 1:1 und 1:5, und besonders bevorzugt zwischen 1:1 und 1:2, zu Methylaluminoxan bevorzugt zwischen 1:1 und 1:2000 und besonders bevorzugt zwischen 1:10 und 1:1000. Da viele der Aktivatoren, wie z.B. Aluminiumalkyle gleichzeitig zur Entfernung von Katalysatorgiften verwendet werden (sogenannte scavenger), ist die eingesetzte Menge von der Verunreinigung der übrigen Einsatzstoffe abhängig. Der Fachmann kann jedoch durch einfaches Probieren die optimale Menge bestimmen.

Der Übergangsmetallkomplex kann dabei entweder vor oder nach Kontaktierung mit den zu polymerisierenden Olefinen mit der oder den Aktivatorverbindungen in Kontakt gebracht werden. Auch eine Voraktivierung mit ein oder mehreren Aktivatorverbindungen vor der Durchmischung mit dem Olefin und weitere Zugabe der gleichen oder anderer Aktivatorverbindungen nach Kontaktierung dieses Gemisches mit dem Olefin ist möglich. Eine Voraktivierung erfolgt in der Regel bei Temperaturen zwischen 10-100°C, bevorzugt zwischen 20-80°C.

Die erfindungsgemäßen Katalysatoren (A) können optional auch auf einem organischen oder anorganischen Träger immobilisiert und in geträgerter Form in der Polymerisation verwendet werden. Dies ist eine gängige Methode, um Reaktorablagerungen zu vermeiden und die Polymermorphologie zu steuern. Als Trägermaterialien werden bevorzugt Kieselgel, Magnesiumchlorid, Aluminiumoxid, mesoporöse Materialien, Aluminosilikate und organische Polymere wie Polyethylen, Polypropylen oder Polystyrol und insbesondere Kieselgel oder Magnesiumchlorid verwendet.

Die Aktivatorverbindungen (B) und der Metallkomplex (A) können mit dem Träger in verschiedenen Reihenfolgen oder gleichzeitig in Kontakt gebracht werden. Dies wird in der Regel in einem inerten Lösungsmittel durchgeführt, das nach der Immobilisierung abfiltriert oder verdampft werden kann. Auch die Verwendung des noch feuchten, geträgerten Katalysators ist aber möglich. So kann zuerst die Mischung des Trägers mit dem oder den Aktivatorverbindungen oder auch zuerst das Kontaktieren des Trägers mit dem Polymerisationskatalysator erfolgen. Auch eine Voraktivierung des Katalysators mit einer oder mehreren Aktivatorverbindungen vor der Durchmischung mit dem Träger ist möglich. Die Menge an Metallkomplex (A) (in mmol) pro Gramm Trägermaterial kann stark variieren z.B. zwischen 0.001 bis 1. Die bevorzugt Menge an Metallkomplex (A) pro Gramm Trägermaterial liegt zwischen 0.001 und 0.5 mmol/g, und besonders bevorzugt zwischen 0.005 und 0.1 mmol/g. In einer möglichen Ausführungsform kann der Metallkomplex (A) auch in Anwesenheit des Trägermaterials hergestellt werden. Eine weitere Art der Immobilisierung ist auch die Vorpolymerisation des Katalysatorsystems mit oder ohne vorherige Trägerung.

Das erfindungsgemäße Ethylencopolymer kann auch Bestandteil einer Polymermischung sein. Die Art der weiteren Polymerkomponenten in der Mischung hängt von der Art der späteren Verwendung der Mischung ab. Die Mischung kann z.B. durch Blending von zusätzlich ein oder mehreren LLDPEs oder HDPEs oder LDPEs erfolgen. Andererseits kann die Polymermischung durch gleichzeitige Polymerisation ein oder mehrere ebenfalls für die Polymerisation von Olefinen aktiven Katalysatorsystems erfolgen. Als Katalysatoren (C) für die Herstellung der Blendpolymere bzw. zur gleichzeitigen Polymerisation sind hierbei besonders klassische Ziegler Natta Katalysatoren auf der Basis von Titan, klassische Phillips Katalysatoren auf der Basis von Chromoxiden, Metallocene, die sogenannten constrained geometry Komplexe(siehe z.B. EP A 0 416 815 oder EP A 0 420 436), Nickel und Palladium Bisimin-Systeme (zu deren Darstellung siehe WO 9803559 A1) oder Eisen und Cobalt Pyridinbisimin-Verbindungen (zu deren Darstellung siehe WO 9827124 A1). (C) kann aber auch ein anderer erfindungsgemäßer Chromkomplex sein. Die Polymerisationskatalysatoren (C) können ebenfalls geträgert sein.

Das erfindungsgemäße Ethylencopolymer kann mit anderen Olefinpolymeren, insbesondere Ethylenhomo- und copolymeren auch bimodale Mischungen bilden. Diese können einerseits durch die oben beschriebene gleichzeitige Anwesenheit eines weiteren für die Polymerisation von Olefinen geeigneten Katalysators oder durch nachträgliches Blenden der separat erhaltenen Polymerisate bzw. Copolymerisate erhalten werden.

Die Blends, welche die erfindungsgemäßen Olefincopolymere enthalten, können auch noch zwei oder drei andere Olefinpolymere, bzw. copolymere beinhalten. Dies können z.B. LDPE's sein (blends davon sind z.B. in DE-A1-19745047 beschrieben), oder Polyethylenhomopolymere (Blends davon sind z.B. in EP-B-100843 beschrieben), LLDPE's (wie z.B. in EP-B-728160 oder WO-A-90/03414 beschrieben), LLDPE/LDPE (WO 95/27005 oder EP-B1-662989)

Der Anteil des erfindungsgemäßen Ethylencopolymeren an der Gesamtmasse der Polymermischung beträgt mindestens 40 bis 99 Gew.-%, vorzugsweise von 50 bis 90 Gew.-%.

Die Ethylencopolymere, Polymermischungen und Blends können noch an sich bekannte Hilfs- und/oder Zusatzstoffe enthalten, wie Verarbeitungsstabilisatoren, Stabilisatoren gegen Licht- und Wärmeeinflüsse, übliche Additive wie Gleitmittel, Antioxidationsmittel, Antiblockmittel und Antistatika, sowie gegebenenfalls Farbstoffe. Art und Menge dieser Zusatzstoffe sind dem Fachmann geläufig.

Weiterhin hat sich herausgestellt, daß Beimischungen geringer Mengen von Fluorelastomeren oder thermoplastischer Polyester die Verarbeitungseigenschaften der erfindungsgemäßen Polymere weiter verbessern können. Solche Fluorelastomere sind als Verarbeitungshilfsmittel als solche bekannt und im Handel z.B. unter den Handelsnamen Viton® und Dynamar® erhältlich (siehe z.B. auch US-A-3125547). Sie werden vorzugsweise in Mengen von 10 bis 1000 ppm, besonders bevorzugt von 20 bis 200 ppm, bezogen auf die Gesamtmasse der erfindungsgemäßen Polymermischung, zugegeben.

Die erfindungsgemäßen Polymere können auch nachträglich noch modifiziert werden durch Grafting, Vernetzung, Hydrierung, Funktionalisierung oder andere Funktionalisierungsreaktionen, die dem Fachmann bekannt sind.

Die Herstellung der Polymerblends kann nach allen bekannten Verfahren erfolgen. Dies kann beispielsweise durch Zuführung der grießförmigen Komponenten zu einem Granulieraggregat, z.B. einem Zweischneckenkneter (ZSK) oder Farrelkneter, erfolgen. Weiterhin kann auch direkt eine Granulatmischung auf einer Folienherstellanlage verarbeitet werden.

Die Polymermischungen eignen sich z.B. hervorragend zur Herstellung von Folien auf Blasfolien- und Castfilmanlagen bei hohen Ausstoßleistungen. Die Folien aus den Polymermischungen zeichnen sich durch sehr gute mechanische Eigenschaften, hohe Schockfestigkeit und hohe Reißfestigkeit bei guten optischen Eigenschaften aus. Sie eignen sich insbesondere für den Verpackungsbereich sowohl für hochbeanspruchbare Schwersackverpackungen als auch für den Lebensmittelbereich. Weiterhin zeigen die Folien nur geringe Blockneigung und sind daher auch ohne oder mit nur geringen Gleit- und Antiblockmittelzusätzen maschinengängig.

Auf Grund ihrer guten mechanischen Eigenschaften eignen sich die mit dem erfindungsgemäßen Katalysatorsystem hergestellten Copolymerisate von Olefinen ebenfalls für die Herstellung von Fasern und Formkörpern.

Die folgenden Beispiele erläutern die Erfindung.

### Analytik

NMR-Proben wurden unter Inertgas abgefüllt und gegebenenfalls eingeschmolzen. Als interner Standard dienten in den ¹H- und ¹³C-NMR-Spektren die Lösungsmittelsignale, deren chemische Verschiebung auf TMS umgerechnet wurde. NMR-Messungen wurden an einem Bruker AC 200 und, insbesondere COSY-Experimente, an einem Bruker AC 300 durchgeführt.

Massenspektren wurden an einem VG Micromass 7070 H und einem Finnigan MAT 8230 gemessen. Hochaufgelöste Massenspektren wurden an den Geräten Jeol JMS-700 und VG ZAB 2F gemessen.

Elementaranalysen wurden an einem Heraeus CHN-O-Rapid bestimmt.

Der Comonergehalt des Polymeren (%C₆), dessen Methylseitenkettengehalt pro 1000 C-Atome der Polymerkette (CH₃/1000) und dessen Dichte wurde durch IR Spectroskopie bestimmt.

Die TREF-Untersuchungen wurden unter folgende Bedingungen durchgeführt: Lösungsmittel: 1,2,4-Trichlorbenzol, Fluß: 1ml/min, Heizgeschwindigkeit: 1°C/min, Polymermenge 5-10 mg, Träger Kieselgur (Ta: max. Temperatur: O: Breite der Verteilung).

Der η Wert wurde mit einem automatischen Ubbelohde Viskometer (Lauda PVS 1) mit Dekalin als Lösungsmittel bei 130 °C bestimmt (ISO1628 bei 130°C, 0,001 g/ml Decalin).

Die Bestimmung der Molmassenverteilungen und der daraus abgeleiteten Mittelwerte Mn, Mw, Mw/Mn und Mz erfolgte mittels Hochtemperatur-Gelpermeations-chromatographie in Anlehnung an DIN 55672 unter folgende Bedingungen: : Lösungsmittel: 1,2,4-Trichlorbenzol, Fluß: 1ml/min, Temperatur: 140°C, Kalibrierung mit PE Standards.

Abkürzungen in den folgenden Tabellen:
- Kat.: Katalysator (der erfindungsgemäße Übergangsmetallkomplex)
- T: Temperatur während der Polymerisation
- Mw: Gewichtsmittel des Molekulargewichts
- Mn: Zahlenmittel des Molekulargewichts
- Tm: Schmelztemperatur
- Eta: Staudingerindex (Viskosität) = 1
- Dichte: Polymerdichte
- CH₃/1000: Anzahl der Methylseitenketten pro 1000 C-Atomen
- %C₆: Comonomergehalt des Polymeren in Gew.-%

### Allgemeine Synthesevorschrift:

### Beispiel 1.

### 1-(8-Chinolyl)indenylchrom(III)dichlorid

### 1.1. Darstellung von 1-(8-Chinolyl)inden

8-Bromchinolin (10.4 g, 50mmol) wurde in 100 ml THF vorgelegt und auf etwa -100 °C gekühlt. Innerhalb von 5 min. wurden 20ml n-BuLi (2.5M in Hexan, 50 mmol) zugetropft, wobei die Innentemperatur unter--80 °C gehalten wurde. Nach beendeter Zugabe wurde weitere 15 min bei--80 °C gerührt und dann 6.6 g 1-Indanon (50 mmol) gelöst in 30 ml THF innerhalb von 10 min zugetropft. Danach ließ man das Reaktionsgemisch langsam auf Raumtemperatur kommen und erhitzte dann 3 h unter Rückfluß. Nachdem die Mischung auf Raumtemperatur abgekühlt war, wurde zunächst Eis und dann Salzsäure bis etwa pH 1 zugegeben und 30 min gerührt. wäßrige und organische Phase wurden getrennt, die wäßrige Phase mit Ammoniaklösung bis etwa pH 9 versetzt, mit Ether extrahiert und die vereinigten organischen Phasen anschließend im Vakuum zur Trockene eingeengt. Das so erhaltene viskose Öl (1-(8-Chinolyl)-indan-1-ol (8H₂O)) wurde mit Salzsäure bis pH 0 versetzt, 2 Stunden unter Rückfluß erhitzt und anschließend neutralisiert. Nach Aufarbeiten und Trocknen konnten 6.6 g 1-(8-Chinolyl)inden (55%) als farbloser Feststoff isoliert werden.
1-(8-Chinolyl)-indan-1-ol (8H₂O)
- 1H-NMR:: (200 MHz, CDCl₃) δ = 2.58 - 2.87 (m, 3H, C*H*₂); 6.94 (dd, 1H, Chinolin C*H*); 7.24 - 7.36 (m, 4H, C*H*); 7.44 - 7.50 (m, 2H, *H*3, *H*6); 7.70 (dd, 1H, Chinolin C*H*) ; 8.23 (dd, 1H); 8.66 (s, br, 1H, O*H*); 8.92 (dd, 1H).
- 13C-NMR:: (200 MHz, CDCl₃) δ = 30.2, 44.8 (*C*H₂); 87.2 (*C*OH); 120.8, 124.7, 125.1, 126.4, 126.9, 127.2, 127.5, 128.2, 137.9, 147.7 (*C*H); 127.4, 129.2, 142.6, 143.8, 146.7 (quart. *C*).
1-(8-Chinolyl)inden
Smp.: 108 °C.
- 1H-NMR:: (200 MHz, CDCl₃) δ = 3.69 (d, 2H, C*H*₂); 6.80 (t, 1H, =C*H*); 7.12 - 7.26 (m, 3H); 7.41 (dd, 1H); 7.55 - 7.64 (m, 2H); 7.81 - 7.88 (m, 2H); 8.21 (dd, 1H); 8.92 (dd, 1H).
- 13C-NMR:: (50 MHz, CDCl₃) δ = 38.8 (*C*H₂); 121.0, 121.2, 123.8, 124.5, 125.8, 126.3, 127.8, 130.0, 133.5, 136.1, 150.0 (*C*H); 128.6, 135.9, 143.7, 144.0, 145.6, 146.7 (quart.*C*).
MS (EI): m/z (%) = 243 (65) [M⁺]; 242 (100) [M⁺-H].
HR-MS (EI): 243.1048 (ber.), 243.1038 (gef.).

| | | | | |
|---|---|---|---|---|
| C,H,N-Analyse | ber. | 88.86% C, | 5.39% H, | 5.75% N |
| | gef. | 87.55% C, | 5.52% H, | 5.92% N. |

### 1.2. Darstellung von Dichloro-[1-(8-chinolyl)indenyl]chrom(III):

In 20 ml THF wurden 0.05 g Kaliumhydrid (1.23 mmol) suspendiert und 0.3 g 1-(8-Chinolyl)inden (1.23 mmol) langsam zugegeben. Die so erhaltene violette Suspension wurde nach dreistündigem Rühren bei Raumtemperatur zu einer Mischung von 0.46 g Chrom(III)chloridx3THF (1.23 mmol) in 50 ml THF getropft und nach beendeter Zugabe noch 16 Stunden gerührt. Das Lösungsmittel wurde im Vakuum entfernt und der so erhaltene Feststoff auf einer G4-Fritte mehrmals mit heißem Toluol extrahiert. Nach Abdestillieren des Solvens aus den vereinten Extrakten fiel das Produkt als grünes Pulver an, das mehrmals mit Hexan gewaschen und im HV getrocknet wird. 0.22 g Dichloro-[1-(8-chinolyl)indenyl]chrom(III) (50%) konnten so erhalten werden.

Alternativ konnte der Rückstand auch in Methylenchlord aufgenommen werden und nach Abtrennung von Kaliumchlorid und Entfernen des Lösungsmittels wurde ebenfalls der Chromkomplex erhalten.
MS (EI): m/z (%) = 364 (0.2, M⁺); 329 (0.1, M⁺-Cl); 242 (100, Ind(Chinolin)⁺)
HR-EI-MS: 363.97519 (ber.), 363.97615 (gem.)

### Beispiele 2 und 3

### Copolymerisation von Ethen mit 1-Hexen

Die Polymerisationsversuche wurden in einem mit Kontaktthermometer, Rührer mit Teflonblatt, Heizpilz und Gaseinleitungsrohr versehenen 11-Vierhalskolben durchgeführt. Unter Argon wurden die in Tabelle 1 angegebene Menge Dichloro-[1-(8-chinolyl)indenyl]chrom(III) in 250 ml Toluol bei 40°C vorgelegt. Bei der Aktivierung mit MAO wurde jeweils die in Tabelle 2 angegebene Menge 1,6 M MAO Lösung in Toluol zugegeben.

Es wurden vor der Ethylenzugabe 5ml Hexen vorgelegt und anschließend ca. 20 bis 40 l/h Ethylen bei Atmosphärendruck für eine Stunde durchgeleitet. Die Restmenge an Hexen wurde innerhalb von 15 min über einer Tropftrichter zudosiert.

Die Reaktion wurde durch Zugabe eines Gemisches aus 15 ml konzentrierter Salzsäure und 50 ml Methanol abgestoppt und 15 min nachgerührt. Nach Zugabe von weiteren 250 ml Methanol und 15 min rühren, wurde abfiltriert, dreimal mit Methanol gewaschen und bei 70°C getrocknet. In Tabelle 1 sind die Polymerisations- bzw. Produktdaten zusammengefaßt.

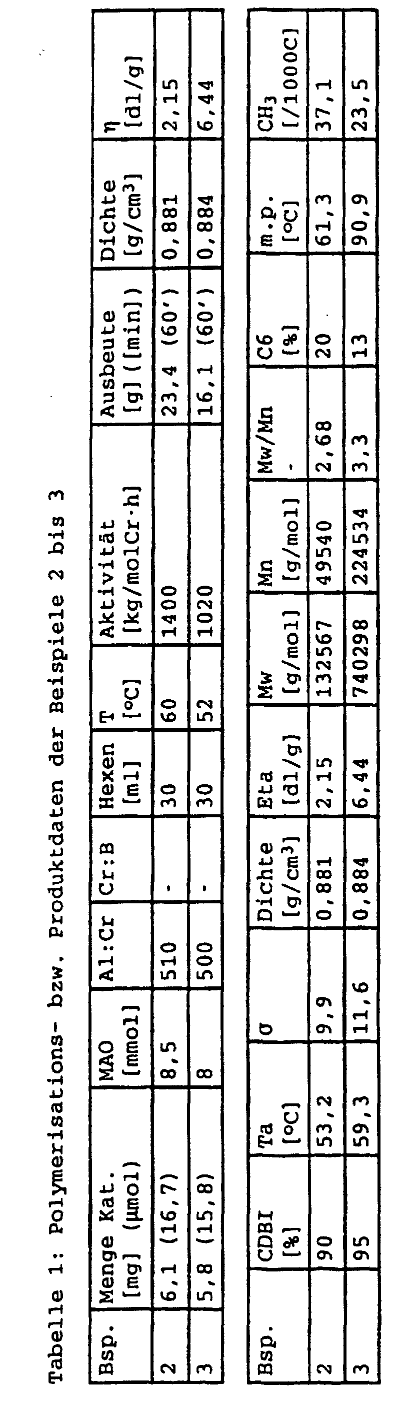

## Patentansprüche

1. Copolymere von Ethylen mit C₃-C₉ α-Olefinen, welche eine Molmassenverteilung Mw/Mn von ≤ 10, eine Dichte von 0.88 bis 0.93 g/cm³, einen comonomeranteil von 1 bis 40 Gew.% Comonomer und eine Molmasse Mn größer 150000 g/mol aufweisen und deren Index der Breite der Zusammensetzungsverteilung des Comonomeren größer als 70% ist.

2. Copolymere von Ethylen mit C₃-C₉ α-Olefinen nach Anspruch 1, **dadurch gekennzeichnet, daß** deren Index der Breite der Zusammensetzungaverteilung des Comonomeren größer als 90% ist.

3. Copolymere von Ethylen mit C₃-C₉ α-Olefinen nach Anspruch 1 oder 2, **dadurch gekennzeichnet, daß** die verwendeten α-Olefine aus der Gruppe Propen, 1-Buten, 1-Hexen und 1-Okten ausgewählt sind.

4. Copolymere von Ethylen mit C₃-C₉ α-Olefinen nach den Ansprüchen 1 bis 3, **dadurch gekennzeichnet, daß** deren Molmassenverteilung Mw/Mn zwischen 2 und 4 liegt.

5. Copolymere von Ethylen mit C₃-C₉ α-Olefinen nach den Ansprüchen 1 bis 4, deren Molekulargewicht Mn größer als 200000 g/mol ist.

6. Verfahren zur Herstellung von Ethylencopolymeren gemäß den Ansprüchen 1 bis 5 **dadurch gekennzeichnet, daß** das Verfahren in Anwesenheit von folgenden Komponenten durchgeführt wird:
(A) Substituierte Monoindenyl- oder Monofluorenylchromkomplexe der allgemeinen Formel I 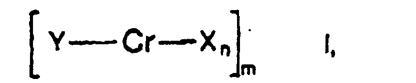 worin die variablen folgende Bedeutung besitzen:
Y durch folgende allgemeine Formel II 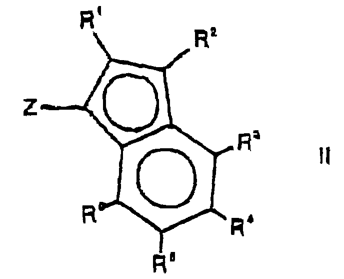 beschrieben ist, worin
Z ein unsubstituiertes, substituiertes oder kondensiertes, heteroaromatisches Ringsystem bedeuten,
X unabhängig voneinander Fluor, Chlor, Brom, Jod, Wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR⁷R⁸, OR⁷, SR⁷, SO₃R⁷, OC(O)R⁷, CN, SCN, β-Diketonat, CO, BF₄-, PF₆-, oder sperrige nichtkoordinierende Anionen,
R¹-R⁸ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR⁹₃, wobei die organischen Reste R¹-R⁸ auch durch Halogene substituiert sein können und je zwei geminale oder vicinale Reste R¹-R⁸ auch zu einem fünf- oder sechsgliedrigen aromatischen oder aliphatischen Ring verbunden sein können,
R⁹ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei geminale Reste R⁹ such zu einem fünf- oder sechsgliedrigen Ring verbunden sein können,
n 1, 2 oder 3,
m 1, 2 oder 3,
und
(B) optional einer oder mehreren Aktivatorverbindungen.

7. Verfahren zur Herstellung von Ethylencopolymeren nach Anspruch 6, **dadurch gekennzeichnet, daß** in der Komponente (A) Z ein unsubstituiertes oder substituiertes 8-(Chinolyl)System und R¹ bis R⁶ gleich Wasserstoff ist.

8. Verfahren nach Anspruch 6 oder 7, **dadurch gekennzeichnet, daß** man als Aktivatorverbindung (B) eine Verbindung ausgewählt aus der Gruppe Aluminoxan, Dimethylaniliniumtetrakispentafluorophenylborat, Trityltetrakispentafluorophenylborat oder Trispentafluorophenylboran verwendet.

9. Polymermischungen, wobei mindestens ein Copolymere von Ethylen mit C₃-C₉ α-Olefinen gemäß den Ansprüchen 1 bis 5 enthalten ist.

10. Verwendung von Copolymere von Ethylen mit C₃-C₉ α-Olefinen gemäß den Ansprüchen 1 bis 5 zur Herstellung von Fasern, Folien und Formkörpern.

11. Fasern, Folien und Formkörper, worin die Copolymere von Ethylen mit C₃-C₉ α-Olefinen gemäß den Ansprüchen 1 bis 5 als wesentliche Komponente enthalten sind.

## Claims

1. A copolymer of ethylene with C₃-C₉ α-olefins, which has a polydispersity Mw/Mn of ≤ 10, a density of from 0.88 to 0.93 g/cm³, a proportion of from 1 to 40% by weight of comonomer and a molar mass Mn above 150,000 g/mol and a comonomer composition distribution breadth index above 70%.

2. A copolymer of ethylene with C₃-C₉ α-olefins as claimed in claim 1, which has a comonomer composition distribution breadth index above 90%.

3. A copolymer of ethylene with C₃-C₉ α-olefins as claimed in claim 1 or 2, wherein the α-olefins used have been selected from the group consisting of propene, 1-butene, 1-hexene and 1-octene.

4. A copolymer of ethylene with C₃-C₉ α-olefins as claimed in any of claims 1 to 3, whose polydispersity Mw/Mn is from 2 to 4.

5. A copolymer of ethylene with C₃-C₉ α-olefins as claimed in any of claims 1 to 4, whose molecular weight Mn is above 200,000 g/mol.

6. A process for preparing ethylene copolymers as claimed in any of claims 1 to 5, which comprises carrying out the process in the presence of the following components:
(A) Substituted monoindenyl- or monofluorenylchromium complexes of the formula I 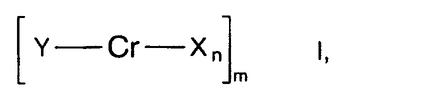 where:
Y has the following formula II 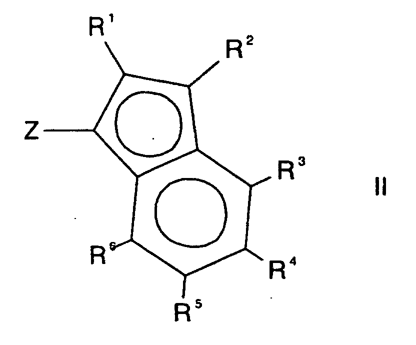 where
Z is an unsubstituted, substituted or condensed heteroaromatic ring system,
X , independently of one another, are fluorine, chlorine, bromine, iodine, hydrogen, C₁-C₁₀-alkyl, C₂-C₁₀-alkenyl, C₆-C₂₀-aryl, alkylaryl having from 1-10 carbon atoms in the alkyl radical and from 6-20 carbon atoms in the aryl radical, NR⁷R⁸, OR⁷, SR⁷, SO₃R⁷, OC(O)R⁷, CN, SCN, β-diketonate, CO, BF₄-, PF₆-, or bulky noncoordinating anions,
R¹-R⁸, independently of one another, are hydrogen, C₁-C₂₀-alkyl, C₂-C₂₀-alkenyl, C₆-C₂₀-aryl, alkylaryl having from 1 to 10 carbon atoms in the alkyl radical and from 6-20 carbon atoms in the aryl radical, SiR⁹₃, where the organic radicals R¹-R⁸ may also have halogen substitution and any two geminal or vicinal radicals R¹-R⁸ may also have been bonded to give a 5- or 6-membered aromatic or aliphatic ring,
R⁹, independently of one another, are hydrogen, C₁-C₂₀-alkyl, C₂-C₂₀-alkenyl, C₆-C₂₀-aryl, alkylaryl having from 1 to 10 carbon atoms in the alkyl radical and from 6-20 carbon atoms in the aryl radical, and where the two geminal radicals R⁹ may also have been bonded to give a five- or six-membered ring,
n is 1, 2 or 3, and
m is 1, 2 or 3,
and
(B) if desired, one or more activator compounds.

7. A process for preparing ethylene copolymers as claimed in claim 6, wherein Z in component (A) is an unsubstituted or substituted 8-(quinolyl) system and R¹ - R⁶ are hydrogen.

8. A process as claimed in claim 6 or 7, wherein the activator compound (B) used comprises a compound selected from the group consisting of aluminoxane, dimethylanilinium tetrakispentafluorophenylborate, trityl tetrakispentafluorophenylborate and trispentafluorophenylborane.

9. A polymer mixture which comprises at least one copolymer of ethylene with C₃-C₉ α-olefins as claimed in any of claims 1 to 5.

10. The use of copolymers of ethylene with C₃-C₉ α-olefins as claimed in any of claims 1 to 5 for producing fibers, films or moldings.

11. A fiber, a film or a molding which comprises the copolymers of ethylene with C₃-C₉ α-olefins as claimed in any of claims 1 to 5 as a substantial component.

## Revendications

1. Copolymères d'éthylène avec des α-oléfines en C₃-C₉, qui présentent une distribution de masses moléculaires Mw/Mn de ≤ 10, une masse volumique de 0,88 à 0,93 g/cm³, une proportion de comonomère de 1 à 40% en poids de comonomère et une masse molaire Mn supérieure à 150000 g/mol, et dont l'indice d'étendue de la distribution de la composition du comonomère est supérieur à 70%.

2. Copolymères d'éthylène avec des α-oléfines en C₃-C₉ selon la revendication 1, **caractérisés par le fait que** leur indice d'étendue de la distribution de la composition du comonomère est supérieur à 90%.

3. Copolymères d'éthylène avec des α-oléfines en C₃-C₉ selon la revendication 1 ou 2, **caractérisés par le fait que** les α-oléfines utilisées sont choisies dans le groupe du propène, du 1-butène, du 1-hexène et du 1-octène.

4. Copolymères d'éthylène avec des α-oléfines en C₃-C₉ selon les revendications 1 à 3, **caractérisés par le fait que** leur distribution de masses moléculaires Mw/Mn se situe entre 2 et 4.

5. Copolymères d'éthylène avec des α-oléfines en C₃-C₉ selon les revendications 1 à 4, **caractérisés par le fait que** leur masse moléculaire Mn est supérieure à 200000 g/mol.

6. Procédé pour la préparation de copolymères d'éthylène selon les revendications 1 à 5, **caractérisé par le fait que** le procédé est mis en oeuvre en présence des composants suivants:
(A) complexes de monoindényle ou de monofluorényle substitués de formule générale I 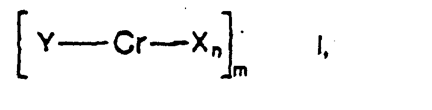 où les variables ont la signification suivante:
Y est décrit par la formule générale suivante II 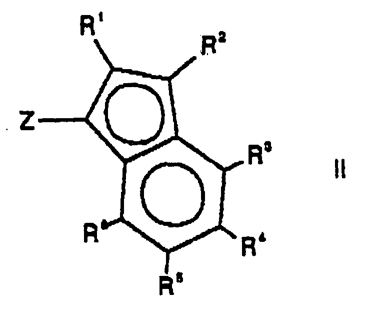
où
Z désigne un système cyclique hétéroaromatique non-substitué, substitué ou condensé,
X désignent, indépendamment l'un de l'autre, fluor, chlore, brome, iode, hydrogène, alkyle en C₁-C₂₀, alcényle en C₂-C₁₀, aryle en C₆-C₂₀, alkylaryle ayant 1-10 atomes de carbone dans le reste alkyle et 6-20 atomes de carbone dans le reste aryle, NR⁷R⁸, OR⁷, SR⁷, SO₃R⁷, OC(O)R⁷, CN, SCN, β-dicétonate, CO, BF₄-, PF₆-, ou des anions non-coordinants volumineux,
R¹-R⁸ désignent, indépendamment l'un de l'autre, alkyle en C₁-C₂₀, alcényle en C₂-C₂₀, aryle en C₆-C₂₀, alkylaryle ayant 1 à 10 atomes de carbone dans le reste alkyle et 6-20 atomes de carbone dans le reste aryle, SiR⁹₃, tandis que les restes organiques R¹-R⁸ peuvent également être substitués par des halogènes et que deux restes R¹-R⁸ à chaque fois géminés ou vicinaux peuvent également être liés pour former un cycle à cinq ou six chaînons,
R⁹ désignent, indépendamment l'un de l'autre, hydrogène, alkyle en C₁-C₂₀, alcényle en C₂-C₂₀, aryle en C₆-C₂₀, alkylaryle ayant 1 à 10 atomes de carbone dans le reste alkyle et 6-20 atomes de carbone dans le reste aryle, et à chaque fois deux restes R⁹ géminés peuvent également être liés pour former un cycle à cinq ou six chaînons,
n vaut 1, 2 ou 3,
m vaut 1, 2 ou 3,
et
(B) en option un ou plusieurs composés activateurs.

7. Procédé pour la préparation de copolymères d'éthylène selon la revendication 6, **caractérisé par le fait que** dans le composant (A) Z est un système 8-quinoléyle non-substitué ou substitué et R¹ à R⁶ représentent l'hydrogène.

8. Procédé selon la revendication 6 ou 7, **caractérisé par le fait qu'**on choisit comme composé activateur (B) un composé choisi dans le groupe consistant en l'aluminoxane, le tétrakispentafluorophénylborate de diméthylanilinium, le tétrakispentafluorophénylborate de trityle ou le trispentafluorophénylborane.

9. Mélanges de polymères, dans lesquels au moins un copolymère d'éthylène avec des α-oléfines en C₃-C₉ selon les revendications 1 à 5 est obtenu.

10. Utilisation de copolymères d'éthylène avec des α-oléfines en C₃-C₉ selon les revendications 1 à 5 pour la préparation de fibres, de feuilles et de masses moulées.

11. Fibres, feuilles et masses moulées, dans lesquelles les copolymères d'éthylène avec des α-oléfines en C₃-C₉ selon les revendications 1 à 5 sont contenus comme composant essentiel.
